# EUROPÄISCHE PATENTSCHRIFT

(11) **EP 2 266 782 B1**
(45) Veröffentlichungstag und Bekanntmachung des Hinweises auf die Patenterteilung: **07.03.2012**
(21) Anmeldenummer: 10006416.1
(22) Anmeldetag: 21.06.2010
(51) Int. Cl.: B29C 67/00

(54) **Vorrichtung zur Herstellung eines dreidimensionalen Gegenstandes**
Device for manufacturing a 3D object
Dispositif destiné à la fabrication d'un objet en trois dimensions

(30) Priorität: 22.06.2009 DE 102009030099
(43) Veröffentlichungstag der Anmeldung: 29.12.2010
(73) Patentinhaber: Keinath, Renate, 72336 Balingen (DE)
(72) Erfinder: Keinath, Renate, 72336 Balingen (DE)
(74) Vertreter: Reinhardt, Harry

(56) Entgegenhaltungen:
- EP-A1- 1 886 793

## Beschreibung

### Gebiet der Erfindung

Die Erfindung betrifft eine Vorrichtung zur Herstellung eines dreidimensionalen Gegenstandes aus verfestigbarem Material nach dem Oberbegriff des Anspruches 1.

### Stand der Technik

In der Kunststoffteileherstellung ist bekannt, durch Spritzgießen oder Extrudieren in großen Losgrößen und Serien Teile herzustellen. Der Vorteil des Kunststoff-Spritzgießens beruht insbesondere auf der hochgenauen Herstellung von komplexen Teilgeometrien, wobei die Funktionsvielfalt des Spritzgießvertahrens in optimaler Weise die Anforderungen an eine kostengünstige und wirtschaftliche Produktion von Kunststoffteilen abdeckt.

Gleichzeitig wächst mehr und mehr ein Bedarf nach Kunststoffteilen für Stückzahl 1 und kleine Losgrößen, wie z.B. Musterteile mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping bekannt sind. Die Herstellung solcher Teile beruht in den meisten Fällen auf der Erzeugung der Geometrie aus 3D-Daten. Diese Geometrien werden in unterschiedlichster Form durch entsprechende Mittel wie Aufschmelzen von Pulverschichten durch Wärmeeintrag, z.B. mit Laser, generative Systeme wie Druckverfahren in unterschiedlicher verbindender Form der Pulverteile oder auch im sogenannten Schmelzstrangverfahren hergestellt.

Aus der dem Oberbegriff des Anspruches 1 zugrunde liegenden EP 1 886 793 A1 ist eine Vorrichtung bekannt, bei der eine in der Spritzgießtechnik bekannte Plastifiziereinheit an einem unter Druck setzbaren Materialspeicher für die fluiden Phase eines Materials angekoppelt wird. Zur Erzeugung eines Gegenstands auf einem Objektträger in einem Bauraum wird dieses Material über eine Austragsöffnung in Form von Tropfen ausgetragen, wobei aufgrund der Adhäsionskräfte des Materials ein hoher Druck und meist auch hohe Temperaturen aufgebracht werden müssen. Die Tropfen sollen dabei eine Größe von 0,01 bis 0,5 mm³ aufweisen. Die Öffnungszeit der Austragsblende soll vorzugsweise im Bereich weniger Millisekunden liegen und der Durchmesser der Austragsöffnung im Bereich weniger Zehntelmillimeter.

Aus der WO 95/05943 ist ein dem Tintenstrahldruck ähnliches Prinzip bekannt, bei dem einzelne Tropfen aus einem Material abgesetzt werden. Das Absetzen der Tropfen erfolgt unter Einsatz bekannter Piezowandler, wobei Material 'siphonartig' aus einem Vorratsbehälter nachgefördert wird. Das am Druckkopf anstehende Material steht damit nicht unter Druck.

Nach einem ähnlichen Prinzip arbeiten die Verfahren nach den US-Patenten 6,850,334 B1 und 6,658,314 B1, bei dem photopolymere Materialien nach dem Prinzip eines Tintenstrahldruckers gedruckt und anschließend belichtet werden. Zu diesem Umfeld gehören viele Anmeldungen, die sich mit der Ausgestaltung zugehöriger Druckköpfe und der Beseitigung von dabei entstehenden Problemen beschäftigen (z.B. US 6,259,962 B1, WO 00/52624 A1, WO 00/76772 A1, WO 01/26023 A1, WO 01/53105 A2, WO 2004/044816 A1, WO 2004/050323 A1, WO 2004/096514 A2, WO 2004/096527 A2, WO 2005/053928 A2, EP 1 637 307 A2 oder DE 199 31 112 A1).

Mit dem Prinzip, wie am besten monodisperse Tropfen möglichst gleicher Teilchengröße durch piezoelektrische Schwingungserzeuger erzeugt werden können, beschäftigen sich insbesondere die DE 100 13 451 A1 und DE 100 13 450 B4 oder auch die DE 196 26 428 A1 und die DE 200 05 997 U1. Dies hat jedoch mit einer kunststofftechnischen Erzeugung von Tropfen nichts gemein.

Bei einer Lösung, bei der hochviskose fluide Materialien, wie aufgeschmolzene Kunststoffe, in kleinsten Mengen in diskreten einzelnen Portionen bis hinunter zu wenigen Mikrogramm aus einem Materialspeicher, der unter großem Druck und eventuell hoher Temperatur steht, verarbeitet werden sollen, stellen sich schnell Abdichtungsprobleme ein, insbesondere wenn die ausgetragenen Portionen eine so hohe kinetische Energie besitzen sollen, dass sie die Adhäsionskräfte überwinden können und von der Vorrichtung abheben und als Tropfen weg fliegen.

### Offenbarung der Erfindung

Ausgehend von diesem Stand der Technik liegt der vorliegenden Erfindung die Aufgabe zugrunde, eine Vorrichtung zur Herstellung eines dreidimensionalen Gegenstandes zu schaffen, die auch unter den genannten Bedingungen zuverlässig arbeitet.

Diese Aufgabe wird durch eine Vorrichtung mit den Merkmalen des Anspruches 1 gelöst.

Unter den genannten Bedingungen weist die Austragvorrichtung als Dosiereinheit möglichst wenige Abdichtungen zur Außenwelt auf. Aus diesem Grund weist das Verschlussmittel ein elastisch verformbares Festkörpergelenk auf. Dadurch ist das vorzugsweise als Düsennadel ausgebildete Verschlussmittel einerseits betätigbar, andererseits wird der Aktuator nicht den erschwerten Bedingungen innerhalb des Materialspeichers ausgesetzt. Somit sind außer der Befüllöffnung des Materialspeichers und der Austragsblende keine weiteren Abdichtungen notwendig. Da das Festkörpergelenk zudem durch eine entsprechende geometrische Ausgestaltung quasi integrierte Rückstellkräfte bezüglich des von außen einwirkenden Aktuators aufweist, kann die Anbindung des Aktuators an den Materialspeicher mit geringster Kontaktfläche und einseitig bezüglich der Kraftwirkung erfolgen.

Weitere Vorteile ergeben sich aus den Unteransprüchen und der nachfolgenden Beschreibung.

### Kurzbeschreibung der Figuren

Im Folgenden wird die Erfindung anhand eines in den Figuren dargestellten Ausführungsbeispieles näher erläutert. Es zeigen:
- Fig. 1: eine teilsweise geschnittene Seitenansicht der Vorrichtung,
- Fig. 2: einen vergrößerten Ausschnitt aus Fig. 1 im Bereich der Austragseinheit,
- Fig. 3: eine Schnittdarstellung sowie eine dreidimensionale Ansicht des Verschlussmittels.
- Fig. 4: die Austragseinheit gemäß Fig. 2 in Verbindung mit der zugehörigen Steue- rung.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Vorrichtung zur Herstellung eines dreidimensionalen Gegenstandes 16 aus verfestigbarem Material, das entweder im Ausgangszustand in einer fluiden Phase vorliegt oder verflüssigt werden kann, durch sequentielles Austragen von Tropfen. Dies kann zum Beispiel dadurch erfolgen, dass einzelne diskontinuierliche Tropen 15 sequentiell aus einer Austragseinheit 13 ausgetragen werden, bis sich Schicht für Schicht das Objekt 16 auf einem Objektträger 14 im Bauraum 17 ergibt. Das verfestigbare Material ist ein plastifiziertes Material wie zum Beispiel Silikon oder ein plastifizierbares Material wie Kunststoff oder auch pulverförmige Materialien, wobei es im Wesentlichen darauf ankommt, dass das verfestigbare Material entweder im Ausgangszustand in einer fluiden Phase vorliegt oder verflüssigt werden kann. Das Material kann auch ein unter Wärme reversibel aufschmelzbares und damit recycelbares Material sein. Beliebige andere Materialien können verwendet werden, sofern diese Materialien durch die Vorrichtung plastifizierbar und vor allem durch die wenigstens eine Austragseinheit 13 austragbar sind.

Das verfestigbare Material weist in der fluiden Phase einen sogenannten laminaren Quellfluss auf. In den Quellfluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet. Zwischen zwei den Kavitätsoberflächen nahe liegenden, rasch erstarrten Masseschichten fließt die Schmelze, wobei sie in der Mitte der Kavität mit größeren Geschwindigkeiten zur Fließfront hin schreitet. Kurz bevor die Schmelze die Fließfront erreicht, reduziert sich ihre Geschwindigkeitskomponente in Fließrichtung, sie fließt schräg zur Wand, bis sie sich an die Wand anlegt.

Der laminare Quellfluss ist für die Erzeugung von auf den Bauraum 17 ,ausgerichteten' Tropfen 15 auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich kleiner gleich 1 mm³ und gewünschter Fluggeschwindigkeit ausbilden lassen, andererseits ist eine entsprechend hohe Viskosität des Materials gerade für die Ausbildung einer geeigneten Tropfenform eines diskontinuierlichen Tropfens von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich hiervon bereits dadurch, dass ihre Viskositätszahl um eine bis mehrere Zehnerpotenzen höher ist. So liegt die dynamische Viskositätszahl des verfestigbaren Materials zwischen 100 und 10000 [Pa s], wobei vorzugsweise das verfestigbare Material ein in der Spritzgießtechnik üblicher Kunststoff oder ein Harz ist. Dies macht die Verarbeitung aus einem unter Druck setzbaren Materialspeicher erforderlich, da Drücke von mehr als 10 bis 100 MPa (100 bis 1000 bar) ohne weiteres erforderlich sind, insbesondere wenn zur Erzielung kleiner Tropfenvolumen kleine Austragsöffnungen eingesetzt werden.

Vorzugsweise liegt das gewünschte Volumen des Tropfens 15 insbesondere im Bereich von 0,01 bis 0,5 mm³, vorzugsweise im Bereich von 0,05 bis 0,3 mm³ und besonders vorzugsweise im Bereich von etwa 0,1 mm³. Der Durchmesser der Austrittsöffnung 20 ist insbesondere kleiner gleich 1 mm, vorzugsweise etwa 0,1 mm. Bei einer durchaus üblichen Einspritzgeschwindigkeit von 100 [cm/s], die durch einen sogenannten Punktanguss mit 0,1 [mm] Durchmesser die Masse fördert, ergibt sich mit Volumenstrom durch Fläche ein Wert von 10.000 [m/s]. Dies führt für die fluide Phase zu einem laminaren Quellfluss mit Fliessgeschwindigkeiten bis zu 10.000 m/s.

Die Vorrichtung hat mit ihrer Austragseinheit die Aufgabe, hochviskose fluide Materialien, wie aufgeschmolzene Kunststoffe, in kleinsten Mengen bis hinunter zu wenigen Mikrogramm aus einem Materialspeicher 12 auszutragen, der unter großem Druck und eventuell hoher Temperatur steht. Die kleinsten Mengen/Tropfen 15 des Materials werden in diskreten einzelnen Portionen ausgebracht, wobei deren Größe von der Vorrichtung beeinflussbar ist. Die ausgetragenen Portionen besitzen eine so hohe kinetische Energie, dass sie die Adhäsionskräfte überwinden können und von der Vorrichtung abheben und als Tropfen 15 wegfliegen, um im Bauraum 17 auf dem Objektträger 14 das Objekt 16 aufzubauen.

Da es sich um flüssige, aber hochviskose Materialien handelt, mit hoher Adhäsionskraft und kleinem Gewicht, wird die kinetische Energie mittels einer Druckdifferenz zwischen Materialspeicher 12 und dem im Bauraum 17 gebildeten Flugraum für die Tropfen 15 übertragen. Die Portionierung erfolgt mittels einer getakteten Blende, die mit einer Düsennadel 21 als Verschlussmittel versehen ist. Bedingt durch die geforderten Dimensionen der Portionen als auch die Viskositätseigenschaften sind üblicherweise Drücke im Bereich von 100 MPa (1000 bar) und mehr, Verschlussblenden kleiner 0,1 mm und weiterhin Verschlusszeiten kleiner 0, 001 s erforderlich. Da die Materialien meist Kunststoffe sind, herrschen im Materialspeicher Temperaturen bis zu 450° C.

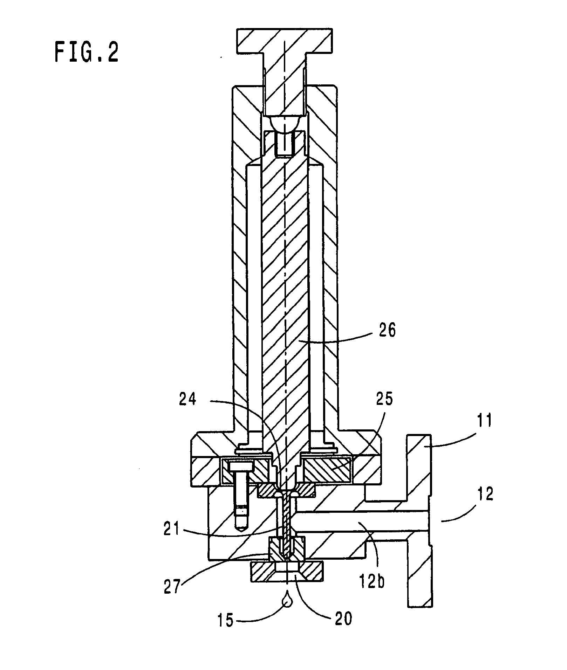

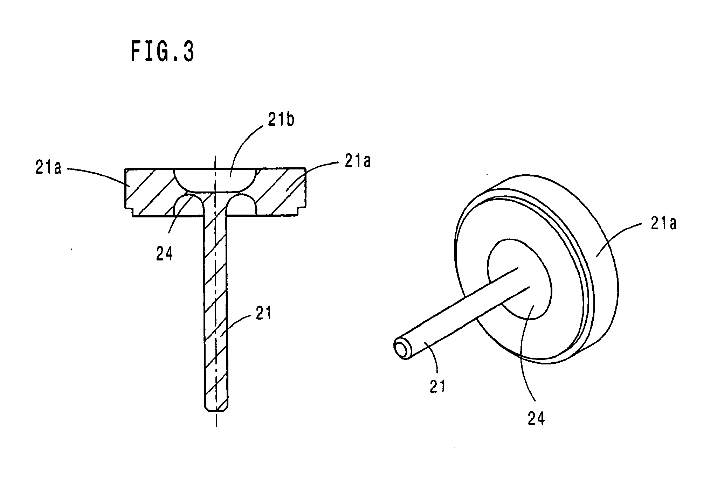

Unter diesen Bedingungen ist die Vorrichtung als Dosiereinheit mit möglichst wenigen Abdichtungen/Kontakten zur Außenwelt zu realisieren. Gemäß Fig. 2 und 3 wird hierzu das Verschlussmittel mit einem elastisch verformbaren Festkörpergelenk 24 ausgebildet. Insbesondere der Querschnitt in Fig. 3 zeigt, dass es sich dabei um eine feste Verbindung handelt, die andererseits aber in der Lage ist, durch den Aktuator 26 entsprechend betätigt zu werden. Als Verschlussmittel wird eine Düsennadel 21 verwendet, die Lagerstellen 21a aufweist. Seitlich zur mittigen Düsennadel 21 wird das Material zur Bildung des Festkörpergelenks 24 ausgedünnt. Rückseitig kann an der Anlagefläche 21 b der Aktuator unmittelbar oder über ein Zwischenelement angreifen. Der Verschlussmechanismus verschließt mit der Düsennadel 21 eine Austragsblende 27.

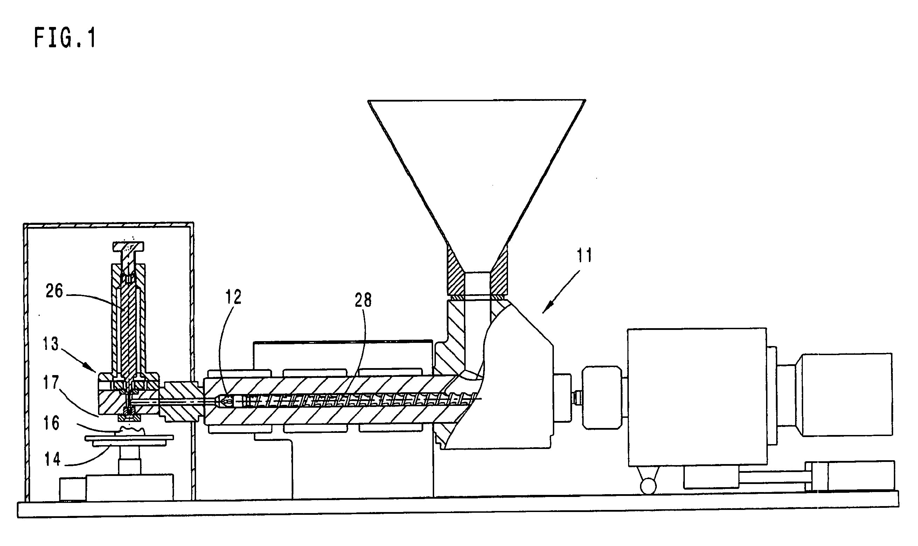

Wenigstens eine Aufbereitungseinheit ist zur Aufbereitung des verfestigbaren Materials in die fluide Phase vorgesehen und von dort gelangt das aufbereitete Material in wenigstens einen Materialspeicher 12 mit mindestens einer Austragseinheit 13. Von dort wird das Material durch eine mit einem taktbaren Verschlussmittel versehene Austrittsöffnung 20 in Richtung auf den Bauraum 17 in Form diskontinuierlicher Tropfen 15 ausgetragen. Um die erforderlichen Randbedingungen sicher zu stellen, ist wenigstens eine Druckerzeugungseinheit zur Erzeugung von Druck auf die fluide Phase im Materialspeicher 12 vorgesehen. Der Materialspeicher 12 kann auch wie im Ausführungsbeispiel Teil der Aufbereitungseinheit 11 sein, die durch eine Plastifiziereinheit gebildet wird. Die Druckerzeugungseinheit ist dann zum Beispiel die in Fig. 1 dargestellte Förderschnecke 28 oder ein ähnliches Fördermittel.

Die Düsennadel ist direkt an das federnde Festkörpergelenk 24 angehängt, welches den Materialspeicher 12 für die fluide Phase des Materials nach außen zum (Betätigungs-)Aktuator 26 verschließt. Somit sind außer der Befüllöffnung des Materialspeichers 12 und der Austragsblende 27 keine weiteren Abdichtungen notwendig. Da das Festkörpergelenk 24 durch eine entsprechende geometrische Ausgestaltung quasi integrierte Rückstellkräfte bezüglich des außen auf eine Anlagefläche 21 b wirkenden Aktuators 26 aufweist, kann die Anbindung des Aktuators an den unter hohem Druck und hoher Temperatur stehenden Materialspeicher mit geringster Kontaktfläche und einseitig bezüglich der Kraftwirkung erfolgen.

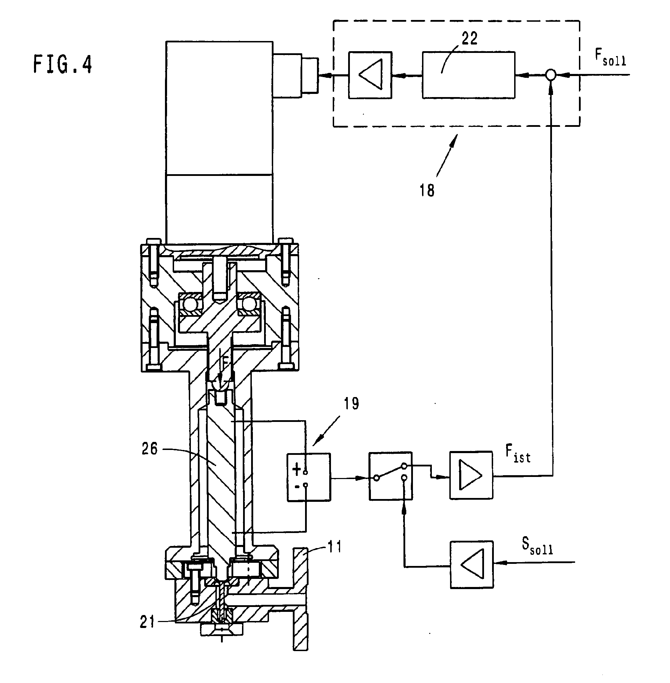

Das Festkörpergelenk 24 dient zugleich als Dichtmittel für den Materialspeicher 12 in Richtung auf einen Aktuator 26, über den die Düsennadel 21 gemäß Fig. 2 einseitig betätigbar ist. Der Aktuator ist vorzugsweise durch ein Isolierelement isoliert vom und beabstandet zum Materialspeicher 12 angeordnet, wie dies in Fig. 4 angedeutet ist.

Das dadurch gebildete Festkörpergelenk 24 ist in verschiedensten geometrischen konstruktiven Gestaltungen möglich und kann zum Beispiel mit Vorspannung so ausgebildet sein, dass die Austragsblende 27 passiv geschlossen oder passiv offen ist. Es kann aus beliebigen druck- und temperaturbeständigen Materialien hergestellt werden, die nicht nur Metall, sondern zum Beispiel auch faserverstärkte Leichtbaumaterialien umfassen. Die dem Druck im Materialspeicher 12 bzw. im Auslasskanal 12b unterworfene Fläche ist auf der der Austrittsöffnung 20 gegenüberliegenden Seite größer als im Bereich der Austrittsöffnung 20. Dadurch würde sich die Düsennadel 21 passiv öffnen. Das bedeutet, dass der Aktuator 26 die Austrittsöffnung aktiv zudrückt bzw. sich die Austrittsöffnung durch Nichtbestromung des Aktuators öffnet.

Der Aktuator 26 kann als Rotorexzenter, Direktmagnet oder als Piezoelement ausgebildet werden. Vorzugsweise ist der Aktuator 26 in der Vorspannung manuell oder geregelt verstellbar. Ebenso kann gemäß Fig. 4 eine Sensorik 19 vorgesehen sein, deren Signale die Stellung des Aktuators 26 den Betriebsbedingungen im Materialspeicher und damit den Betriebspunkt nachregeln, was aufgrund der hohen Drücke und der hohen Temperaturausdehnung zur Kompensation erforderlich ist. Gemäß Fig. 4 werden zum Beispiel die Kräfte im Betätigungselement erfasst und über die Steuerung 18 und den Regler 22 auf Kraftsollwerte nachgeregelt. Dadurch ist es möglich, durch geeignete Druck- und Temperatursensoren im Materialspeicher 12 die Vorspannung des Festkörpergelenks mit automatischer Aktuatorverstellung den Betriebsbedingungen im Materialspeicher nachzuregeln.

Vorzugsweise ist dazu der Aktuator 26 als Kraftmesselement ausgebildet, um die Vorspannung des Festkörpergelenks 24 am Betriebspunkt zu messen und nachzuregeln. Von Vorteil ist es, wenn der Aktuator ein Piezoelement ist. Mit einer derartigen Sensorik 19 und Steuerung 18 ist es auch möglich, gezielt mit dem Aktuator Weg- / Kraftkurven am Festkörpergelenk zu fahren, um dadurch auch gezielt und bewusst die Form des auszutragenden Materials, wie zum Beispiel die Tropfenform zu beeinflussen.

### Bezugszeichenliste

- 11: Aufbereitungseinheit
- 12: Materialspeicher
- 12b: Auslasskanal
- 13: Austragseinheit
- 14: Objektträger
- 15: Tropfen
- 16: Gegenstand
- 17: Bauraum
- 18: Steuerung
- 19: Sensorik
- 20: Austrittsöffnung
- 21: Düsennadel
- 21 a: Lagerstellen 21 b Anlagefläche für 26
- 22: Regler
- 24: Festkörpergelenk
- 25: Isolierelement
- 26: Aktuator
- 27: Austragsblende
- 28: Förderschnecke

## Patentansprüche

1. Vorrichtung zur Herstellung eines dreidimensionalen Gegenstandes (16) aus verfestigbarem Material, das entweder im Ausgangszustand in einer fluiden Phase vorliegt oder verflüssigt werden kann, durch sequentielles Austragen von Tropfen (15) mit
- wenigstens einem Bauraum (17) zum Aufbau des Gegenstandes (16),
- wenigstens einer Aufbereitungseinheit (11) zur Aufbereitung des verfestigbaren Materials in die fluide Phase,
- wenigstens einem Materialspeicher (12) für die fluide Phase mit mindestens einer Austragseinheit (13) zum Austragen des verfestigbaren Materials durch eine mit einem taktbaren Verschlussmittel versehene Austrittsöffnung (20) in Richtung auf den Bauraum (17) in Form diskontinuierlicher Tropfen (15)
- wenigstens einer Druckerzeugungseinheit zur Erzeugung von Druck auf die fluide Phase im Materialspeicher (12),
**dadurch gekennzeichnet, dass** das Verschlussmittel ein elastisch verformbares Festkörpergelenk (24) aufweist.

2. Vorrichtung nach Anspruch 1, **dadurch gekennzeichnet, dass** die Austrittsöffnung (20) durch eine Düsennadel (21) des Verschlussmittels verschließbar ist, die mit ihrer Lagerstelle (21 a) über das Festkörpergelenk (24) verbunden ist.

3. Vorrichtung nach Anspruch 1 oder 2, **dadurch gekennzeichnet, dass** das Festkörpergelenk (24) zugleich als Dichtmittel für den Materialspeicher (12) ausgebildet ist.

4. Vorrichtung nach einem der vorhergehenden Ansprüche, **dadurch gekennzeichnet, dass** die Düsennadel (21) über einen Aktuator (26) einseitig betätigbar, der vorzugsweise isoliert vom und beabstandet zum Materialspeicher (12) angeordnet ist.

5. Vorrichtung nach Anspruch 4, **dadurch gekennzeichnet, dass** der Aktuator (26) in der Vorspannung manuell oder geregelt verstellbar ist.

6. Vorrichtung nach Anspruch 4 oder 5, **dadurch gekennzeichnet, dass** eine Sensorik (19) vorgesehen ist, deren Signale die Stellung des Aktuators (26) den Betriebsbedingungen im Materialspeicher nachregeln.

7. Vorrichtung nach einem der Ansprüche 4 bis 6, **dadurch gekennzeichnet, dass** der Aktuator (26) als Kraftmesselement ausgebildet ist, um die Vorspannung des Festkörpergelenks (24) am Betriebspunkt zu messen und nachzuregeln.

8. Vorrichtung nach einem der Ansprüche 4 bis 7, **dadurch gekennzeichnet, dass** der Aktuator (26) ein Piezo-Element ist.

9. Vorrichtung nach einem der vorhergehenden Ansprüche, **dadurch gekennzeichnet, dass** eine Regel- und Steuereinheit (18) zur Erfassung der Signale der Sensorik (19) und/oder des Kraftmesselements vorgesehen ist, und dass an Hand der erfassten Signale Stellwerte für den Aktuator bestimmbar oder vorgebbar sind.

10. Vorrichtung nach einem der vorhergehenden Ansprüche, **dadurch gekennzeichnet, dass** die dem Druck im Materialspeicher (12) bzw. im Auslasskanal (12b) unterworfene Fläche auf der der Austrittsöffnung (20) gegenüberliegenden Seite größer ist als im Bereich der Austrittsöffnung (20).

11. Vorrichtung nach einem der vorhergehenden Ansprüche, **dadurch gekennzeichnet, dass** die Aufbereitungseinheit (11) zugleich den Materialspeicher (12) ausbildet.

12. Vorrichtung nach einem der vorhergehenden Ansprüche, **dadurch gekennzeichnet, dass** die Aufbereitungseinheit (11) eine in der Spritzgießtechnik bekannte Plastifiziereinheit zur Aufbereitung des verfestigbaren Materials als plastifiziertes oder plastifizierbares Material ist, das in der fluiden Phase einen sogenannten laminaren Quellfluss aufweist, und
dass die Plastifiziereinheit an den unter Druck setzbaren Materialspeicher (12) zum Einbringen der fluiden Phase in den Materiaispeicher angekoppelt ist,

## Claims

1. Device for the production of a three-dimensional object (16) made of solidifiable material, which is either present in a fluid phase in its initial state or can be fluidified, by a sequential discharge of drops (15) comprising
- at least one construction space (17) for constructing the object (16),
- at least one processing unit (11) for processing of the solidifiable material into the fluid phase,
- at least one material reservoir (12) for the fluid phase with at least one discharge unit (13) for the sequential discharge of the solidifiable material in the form of discrete drops (15) in direction of the construction space (17) through a discharge orifice (20) furnished with a clockable closing mechanism,
- at least one pressure generating unit for generating pressure on the fluid phase in the material reservoir (12),
**characterized in that** the closing mechanism comprises an elastic deformable solid body joint (24).

2. Device according to claim 1, **characterized in that** the discharge orifice (20) is closable via a jet needle (21) of the closing mechanism, which is connected to its bearing zone (21a) via the solid body joint (24).

3. Device according to claim 1 or 2, **characterized in that** the solid body joint (24) is simultaneously constructed as a seal for the material reservoir (12).

4. Device according to one of the preceding claims, **characterized in that** the jet needle (21) is adapted to be operated unilaterally via an actuator 26), wherein preferably the actuator is arranged in isolation from and spaced away from the material reservoir (12).

5. Device according to claim 4, **characterized in that** the actuator (26) is adjustable manually or in a controlled manner in respect of its pre-tension.

6. Device according to claim 4 or 5, **characterized in that** a sensor system (19) is provided, the signals of which readjust the position of the actuator (26) according to the operating conditions in the material reservoir (26).

7. Device according to one of the claims 4 to 6, **characterized in that** the actuator (26) is designed as a force measuring element for measuring the pre-tension of the solid body joint (24) at its point of operation and for making adjustments.

8. Device according to one of the claims 4 to 7, **characterized in that** the actuator (26) is a piezo element.

9. Device according to one of the preceding claims, **characterized in that** a regulating and control unit (18) is provided for detecting the signals of the a sensor system (19) and/or the force measuring element, and **in that** control values for the actuator can be determined or specified by means of the detected signals.

10. Device according to one of the preceding claims, **characterized in that** a surface subjected to the pressure in the material reservoir (12) or in the discharge channel (12b), respectively, is larger on the side opposite to the discharge orifice (20) than in an area of the discharge orifice (20).

11. Device according to one of the preceding claims, **characterized in that** the processing unit (11) simultaneously forms the material reservoir (12).

12. Device according to one of the preceding claims, **characterized in that** the processing unit (11) is a plasticizing unit known in injection molding techniques for the processing of the solidifiable material as a plasticized or plasticizable material, which in its fluid phase exhibits a so-called source flow, and
**in that** the plasticizing unit is coupled to the material reservoir (12), which can be pressurized for introducing the fluid phase into the material reservoir.

## Revendications

1. Dispositif pour la fabrication d'un objet tridimensionnel (16) à partir d'un matériau solidifiable qui soit se présente à l'état initial en une phase fluide soit peut être fluidifié, par distribution séquentielle de gouttes (15), comprenant
- au moins un espace de construction (17) pour la construction de l'objet (16),
- au moins une unité de préparation (11) pour la préparation du matériau solidifiable en phase fluide,
- au moins une réserve de matériau (12) pour la phase fluide ayant au moins une unité de distribution (13) pour la distribution du matériau solidifiable à travers un orifice de sortie (20) muni d'un moyen de fermeture cadençable, en direction de l'espace de construction (17) sous la forme de gouttes discontinues (15),
- au moins une unité de production de pression pour produire une pression sur la phase fluide dans le réservoir de matériau (12),
**caractérisé en ce que** le moyen de fermeture comporte une articulation solide (24) déformable élastiquement.

2. Dispositif selon la revendication 1, **caractérisé en ce que** l'orifice de sortie (20) peut être fermé par un pointeau (21) du moyen de fermeture qui est relié à sa base (21a) par l'articulation solide (24).

3. Dispositif selon la revendication 1 ou 2, **caractérisé en ce que** l'articulation solide (24) sert en même temps de moyen d'étanchéité pour le réservoir de matériau (12).

4. Dispositif selon l'une des revendications précédentes, **caractérisé en ce que** le pointeau (21) peut être actionné d'un côté par un organe d'actionnement (26) qui est de préférence isolé et éloigné du réservoir de matériau (12).

5. Dispositif selon la revendication 4, **caractérisé en ce que** l'organe d'actionnement (26) peut être mis sous précontrainte manuellement ou de manière réglée.

6. Dispositif selon la revendication 4 ou 5, **caractérisé qu'**il est prévu un analyseur sensoriel (19) dont les signaux règlent la position de l'organe d'actionnement (26) d'après les conditions de fonctionnement dans le réservoir de matériau.

7. Dispositif selon l'une des revendications 4 à 6, **caractérisé en ce que** l'organe d'actionnement (26) est réalisé sous la forme d'un élément de mesure de la force, pour mesurer et régler la précontrainte de l'articulation solide (24) au niveau du point de fonctionnement.

8. Dispositif selon l'une des revendications 4 à 7, **caractérisé en ce que** l'organe d'actionnement (26) est un élément piézo-électrique.

9. Dispositif selon l'une des revendications précédentes, **caractérisé en ce qu'**une unité de réglage et de commande (18) est prévue pour mesurer les signaux de l'analyseur sensoriel (19) et/ou de l'élément de mesure de la force, et **en ce qu'**à l'aide des signaux mesurés, des valeurs de position de l'organe d'actionnement sont déterminables ou fixables.

10. Dispositif selon l'une des revendications précédentes, **caractérisé en ce que** la surface soumise à la pression dans le réservoir de matériau (12) ou le canal de sortie (12b) est plus grande du côté opposé à l'orifice de sortie (20) que dans la zone de l'orifice de sortie (20).

11. Dispositif selon l'une des revendications précédentes, **caractérisé en ce que** l'unité de préparation (11) constitue en même temps le réservoir de matériau (12).

12. Dispositif selon l'une des revendications précédentes, **caractérisé en ce que** l'unité de préparation (11) est une unité de plastification connue dans la technique du moulage par injection pour la préparation du matériau solidifiable en tant que matériau plastifié ou plastifiable, lequel présente ce qu'on appelle un écoulement laminaire dans la phase fluide, et **en ce que** l'unité de plastification est couplée au réservoir de matériau susceptible d'être mis sous pression pour amener la phase fluide dans le réservoir de matériau.
